# DEMANDE DE BREVET EUROPEEN

(11) **EP 1 638 330 A2**
(43) Date de publication de la demande: **22.03.2006**
(21) Numéro de dépôt: 05291873.7
(22) Date de dépôt: 09.09.2005
(51) Int. Cl.: H04N 7/035, H04N 7/088

(54) **Navigation entre des pages télétexte proposées par différentes chaînes**

(30) Priorité: 16.09.2004 FR 0409827
(71) Demandeur: STMICROELECTRONICS SA, 92120 Montrouge (FR)
(72) Inventeur: Crespo, Thierry, 13530 Trets (FR); Duguet, Stéphane, 13030 Aix-en-Provence (FR)
(74) Mandataire: Bentz, Jean-Paul

(57) **Abrégé**

L'invention a pour objet un procédé de gestion du mode télétexte d'un récepteur de télévision muni d'un unique tuner, comprenant dans ce mode télétexte les étapes consistant à :
- afficher des identifiants (12) de pages télétexte transmises par plusieurs chaînes distinctes (11);
- recevoir une requête d'affichage d'une page télétexte dont l'identifiant est affiché;
- commander ensuite le tuner du récepteur pour récupérer la page requise ;
- afficher la page télétexte requise.

L'invention permet de faciliter la navigation télétexte entre des pages de différentes chaînes.

L'invention porte également sur un dispositif correspondant.

## Description

L'invention concerne l'affichage d'informations télétexte, et en particulier les dispositifs permettant de consulter des pages de télétexte proposées par différentes chaînes.

Le télétexte est notamment défini dans la norme ETS 300 706, ci-après incorporée par référence. Le télétexte est un service annexe de certaines chaînes de télévision destiné à transmettre des informations écrites (du texte) en plus de leurs informations audiovisuelles. Ces informations écrites sont codées sous forme numérique. Elles sont transmises par paquets de données sur les fréquences vidéo dans des intervalles de temps correspondant aux retours de trame. Un paquet de données télétexte est donc transmis toutes les 20 ms. Il est reçu et décodé par un décodeur télétexte inclus ou connecté à un téléviseur.

Les paquets télétexte nécessaires à la définition de toutes les pages télétexte du service sont transmis successivement et de manière cyclique. Les pages d'un service télétexte sont éventuellement associées pour former des ensembles logiques appelés magazines. Lorsqu'on visionne une chaîne et qu'on lance son service télétexte, le décodeur télétexte recherche automatiquement la page 100. Il s'agit d'une page de sommaire sur laquelle sont présentés les différents magazines disponibles pour cette chaîne, ainsi que le numéro de la première page de chacun d'eux. La page de sommaire est chargée dans une mémoire d'affichage du décodeur de télétexte. Celle-ci est lue en permanence par les moyens d'affichage de l'écran du téléviseur afin d'afficher son contenu sur cet écran.

De nombreux téléviseurs présentent des mémoires stockant plusieurs pages télétextes de la chaîne susceptibles d'être ensuite visionnées. Ces pages sont généralement celles qui ont la plus grande probabilité d'être ensuite demandées par l'utilisateur. Ainsi, lorsque l'utilisateur souhaite visionner une de ces pages, elle peut être affichée quasiment instantanément, le décodeur n'ayant pas à balayer les signaux émis par la chaîne pour la charger.

La navigation classique du service télétexte est la suivante : l'utilisateur sélectionne une chaîne, puis active le mode télétexte, par exemple au moyen de sa télécommande. La page télétexte principale est recherchée puis affichée. L'utilisateur navigue entre les pages télétextes de cette chaîne au moyen de touches appropriées. Les commandes normalement prévues pour changer de chaîne sont affectées dans le mode télétexte au changement de la page télétexte affichée. Lorsque l'utilisateur veut ensuite utiliser le télétexte d'une autre chaîne, il doit au préalable sortir du mode télétexte, sélectionner une nouvelle chaîne, puis activer à nouveau le mode télétexte.

L'utilisateur doit attendre que le décodeur charge des pages télétextes de la nouvelle chaîne avant de les visionner, ce qui peut prendre plusieurs secondes. De plus, pour consulter successivement des magazines télétexte similaires proposés par plusieurs chaînes différentes (par exemple la météo ou le programme des retransmissions), les manipulations à effectuer sont fastidieuses (notamment la recherche de l'emplacement du magazine dans le sommaire) et le temps de réponse entre l'affichage des magazines successifs est conséquent.

D'autres dispositifs permettent de faciliter la consultation de pages télétextes de différentes chaînes mais présentent un surcoût non négligeable.

Il existe donc un besoin pour un dispositif de gestion télétexte et un procédé de gestion du mode télétexte qui résolvent un ou plusieurs de ces inconvénients.

L'invention porte ainsi sur un procédé de gestion du mode télétexte d'un récepteur de télévision présentant un unique tuner, comprenant dans ce mode télétexte les étapes consistant à :
- afficher des identifiants de pages télétexte transmises par plusieurs chaînes distinctes;
- recevoir une requête d'affichage d'une page télétexte dont l'identifiant est affiché;
- commander ensuite le tuner du récepteur pour récupérer la page requise ;
- afficher la page télétexte requise.

Selon une variante, le mode télétexte présente sélectivement une étape de saisie d'un identifiant de page télétexte fourni par un utilisateur, et les identifiants de page affichés incluent l'identifiant saisi.

Selon encore une variante, on met en oeuvre des étapes consistant à recevoir une requête d'affichage de l'image d'une chaîne, commander le tuner pour recevoir le signal d'image de cette chaîne, puis afficher l'image correspondant au signal d'image de cette chaîne.

Selon une autre variante, on effectue, durant l'affichage de la page télétexte requise, un balayage des chaînes et la mémorisation de pages télétexte dont l'identifiant (12) est mémorisé.

L'invention porte également sur un dispositif de gestion de fonction télétexte d'un récepteur de télévision, qui comprend :
- un module d'affichage d'une image sur un écran ;
- un unique tuner ;
- un module de commande,
- présentant une interface de réception d'une requête d'un utilisateur demandant l'affichage d'une page télétexte;
- présentant une interface de réception d'une page télétexte destinée à être connectée à des moyens de décodage télétexte ;
- présentant une commande de mode télétexte :

- connectée au tuner ;et
- commandant l'affichage d'identifiants de pages télétexte, l'affichage d'une page télétexte requise par un utilisateur et le changement de chaîne par le tuner en réponse à une requête d'affichage d'une page télétexte par un utilisateur, cette requête impliquant un changement de chaîne.

Selon encore une variante, le module de commande présente une interface de réception d'une requête d'un utilisateur demandant la mémorisation d'un identifiant d'une page télétexte, et la commande commande la mémorisation de l'identifiant requis et l'affichage de cet identifiant.

Selon une variante, le module de commande comprend une interface de réception d'une requête d'un utilisateur demandant l'affichage d'une image d'une chaîne, le module de commande commandant le tuner pour recevoir le signal d'image de cette chaîne lors de la réception d'une requête d'affichage de l'image de cette chaîne, puis commandant l'affichage de l'image correspondante.

Selon encore une variante, le dispositif comprend un module de mémorisation (45) de pages télétexte et un module de mémorisation d'identifiants de pages télétexte, la commande commandant un balayage des chaînes par le tuner et la mémorisation de pages télétexte, dont l'identifiant est mémorisé, durant l'affichage d'une page télétexte requise.

L'invention porte encore sur un récepteur de télévision, qui comprend :
- un dispositif de gestion de fonction télétexte tel que décrit ci-dessus;
- un circuit PIF connecté au tuner ;
- un décodeur connecté au circuit PIF, générant une page télétexte et l'appliquant sur l'interface de réception de page télétexte.

D'autres caractéristiques et avantages de l'invention ressortiront clairement de la description qui en est faite ci-après, à titre indicatif et nullement limitatif, en référence aux dessins annexés, dans lesquels :
- la figure 1 représente un menu selon l'invention affichant des identifiants de pages télétexte de différentes chaînes ;
- la figure 2 représente l'affichage d'une page télétexte ;
- la figure 3 illustre schématiquement des éléments d'un récepteur de télévision utilisés pour mettre en oeuvre l'invention.

L'invention propose un mode télétexte dans lequel on affiche des identifiants de pages télétexte transmises par plusieurs chaînes distinctes. L'utilisateur envoie une requête pour afficher une de ces pages. Ce mode télétexte commande l'unique tuner afin de récupérer la page suite à la requête.

L'invention permet ainsi de faciliter la navigation télétexte entre des pages de différentes chaînes avec un dispositif économique. L'utilisateur n'a donc plus à effectuer une sortie du mode télétexte, un changement de chaîne puis une entrée dans le mode télétexte pour consulter des pages télétexte de plusieurs chaînes différentes.

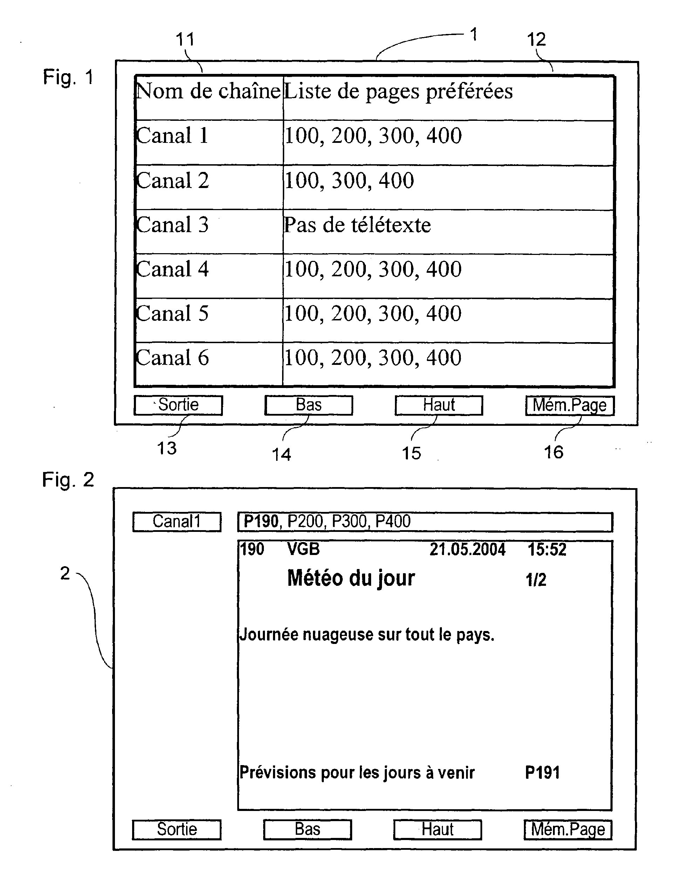

La figure 1 illustre un exemple d'affichage d'identifiants de pages télétexte. Sur cet écran 1, la première colonne 11 présente les noms de plusieurs chaînes et la seconde colonne 12 présente des identifiants de pages transmises par ces chaînes. Les vignettes 13 à 16 au bas de l'écran illustrent des fonctions du mode télétexte qui peuvent être requises par exemple au moyen de touches spéciales d'une télécommande. La figure 2 illustre un exemple d'écran 2 d'affichage d'une page télétexte requise par l'utilisateur. Afin de faciliter la navigation, on peut prévoir un menu préalable présentant un lien vers l'index des multiples chaînes.

La requête de l'utilisateur pour l'affichage d'une page provoque une commande du tuner afin de récupérer cette page.

Le mode télétexte peut également présenter des fonctions supplémentaires. Le mode télétexte peut ainsi présenter une fonction de saisie d'un identifiant d'une page télétexte que l'utilisateur souhaite mémoriser. Cet identifiant est alors mémorisé dans une base de données de pages disponibles, puis utilisé lors de la mise à jour des pages télétexte ou affiché parmi d'autres identifiants de pages proposées. On pourrait également prévoir que la page télétexte soit elle-même mémorisée dans une mémoire non volatile.

Afin que le mode télétexte puisse afficher un menu présentant plusieurs identifiants de pages transmises par différentes chaînes, on peut en outre prévoir que le mode télétexte balaye différentes chaînes, liste les identifiants des pages transmises, puis les mémorise afin de compléter la base de données de pages disponibles. Le mode télétexte peut ensuite lire la base de données afin de déterminer quelles pages télétexte mettre à jour. Afin d'éviter le balayage d'un trop grand nombre de chaînes, on prévoit de mémoriser des chaînes préférées (par exemple définies à l'avance par l'utilisateur) dans la base de données. Le balayage sera alors effectué uniquement entre ces chaînes. On peut aussi prévoir de mémoriser des pages de télétexte préférées par l'utilisateur, appartenant à des chaînes différentes (par exemple Programmes TV sur différentes chaînes). Ces pages préférées peuvent par exemple utiliser l'interface de navigation utilisée pour les pages préenregistrées. On peut notamment prévoir une arborescence des menus créée automatiquement au format de navigation transmis, tel que par exemple TOP. On peut également prévoir de permettre l'application des fonctions INDEX, BLOCK ou GROUP pour ces pages.

Selon un mode de réalisation, le mode télétexte commande en outre une mise à jour de pages télétexte. Dans une variante, le mode télétexte commande en outre au tuner de balayer les chaînes illustrées sur l'écran. Le mode télétexte commande alors la mémorisation des pages télétexte transmises par ces chaînes et dont les identifiants ont été affichés sur l'écran 2. Les pages identifiées sur l'écran ayant donc été mémorisées au préalable, l'utilisateur pourra les visionner sans attendre que le mode télétexte ne les récupère à partir du signal de la chaîne. On peut également prévoir que lors du balayage des chaînes, le mode télétexte mémorise toutes les pages d'une chaîne balayée. On peut en effet noter que le volume maximal des différentes pages télétexte transmises par une chaîne est généralement de l'ordre de 800 Ko (Hors sous pages). Il est donc aisément possible de mémoriser un ensemble de pages télétexte d'un certain nombre de chaînes dans un récepteur approprié. Le mode télétexte pourra donc afficher depuis une mémoire des pages télétexte qui n'étaient pas identifiées sur l'écran. On peut prévoir en outre que le mode télétexte soit activé dans un mode de veille du récepteur afin de commander la mise à jour des pages télétexte. L'utilisateur pourra ainsi visionner un ensemble de pages télétexte mémorisées dès l'allumage du récepteur. On peut également prévoir un mode télétexte commandant une mise à jour automatique, à intervalles réguliers, indépendamment de la requête d'affichage de l'utilisateur. L'utilisateur disposera ainsi de pages télétexte relativement récentes. Le mode télétexte peut également commander la mise à jour durant l'affichage du menu contenant les identifiants des pages ou durant l'affichage d'une page télétexte requise.

On peut prévoir plusieurs possibilités de navigation dans le mode télétexte. On peut notamment prévoir une navigation gérant une indexation de type FLOF ou des pages ordonnées au format TOP.

On peut prévoir que le menu proposé à la figure 1 permette la navigation de haut en bas et de droite à gauche pour sélectionner un identifiant d'une page à afficher. On peut notamment utiliser un curseur déplacé dans le menu, pour mettre en surbrillance un identifiant choisi. Le menu peut également afficher différents magazines de différentes chaînes, entre lesquels il est possible de naviguer. Le menu peut notamment permettre de passer du magazine d'une chaîne au magazine similaire d'une autre chaîne. On peut par exemple envisager un menu d'affichage permettant la navigation entre les pages de programme télé de différentes chaînes. Ces pages de programme télé peuvent être un ensemble de pages prédéfinies et stockées au préalable.

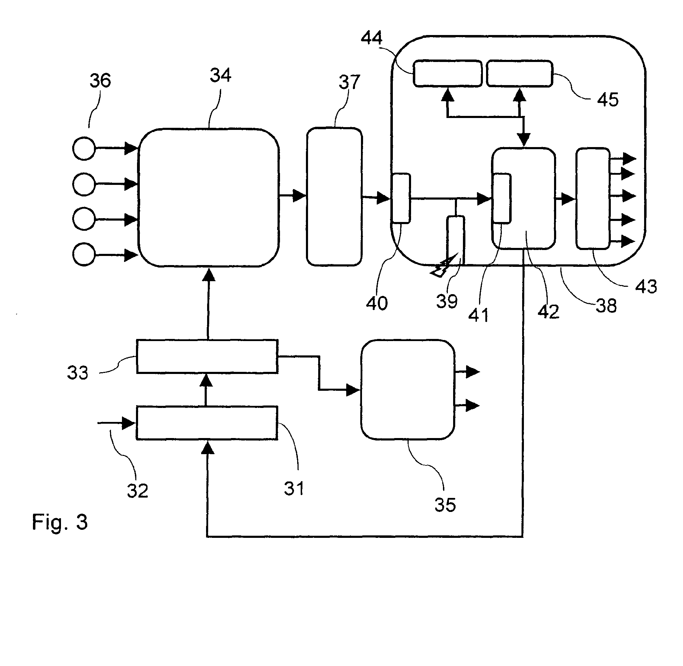

La figure 3 illustre schématiquement des éléments d'un récepteur de télévision mis en oeuvre dans le cadre de l'invention. Un tuner 31 reçoit un signal modulé en radiofréquence sur une entrée d'antenne 32. Le tuner 31 a une consigne de chaîne et transmet à un circuit PIF/SIF 33 le spectre radiofréquence correspondant à cette chaîne. Le circuit PIF/SIF 33 fournit un signal d'image démodulé à un commutateur 34 et un signal de son démodulé à un module de son 35. Le commutateur 34 présente des entrées de signaux d'image 36, telles que des prises péritel, des prises s-vidéo ou analogues. Le commutateur 34 applique sélectivement en sortie le signal fourni par le circuit 33 ou l'une des entrées 36. Le signal de sortie du commutateur 34 est appliqué sur l'entrée d'un décodeur 37. Le décodeur 37 peut fournir un signal d'image numérisé (par exemple au format MPEG-1) et des données télétexte sur l'interface d'entrée 40 d'un module de commande 38. Le module de commande 38 comprend également une interface 39 de réception de requêtes de l'utilisateur, afin de changer de chaîne ou de page télétexte. Ces requêtes peuvent par exemple être transmises par l'intermédiaire d'une télécommande ou des boutons de façade du récepteur de télévision. Le module de commande comprend encore un module d'affichage 43 fournissant un ou plusieurs signaux d'image destinés à être affichés sur un écran.

Le module de commande 38 comprend également une commande de mode télétexte 42. Cette commande de mode télétexte 42 reçoit les données télétexte de l'interface 40 sur un circuit de mise en page 41. La commande 42 reçoit également les requêtes de changement de page de l'interface 39. Le circuit 41 transforme les données télétexte en des pages télétexte affichables. La commande 42 présente également une connexion avec le tuner 31.

Selon l'invention, la commande 42 utilise cette connexion pour appliquer sélectivement une consigne de chaîne sur le tuner 31 en réponse à une requête d'affichage télétexte de l'utilisateur impliquant un changement de chaîne. La commande 42 gère également l'affichage d'identifiants de pages télétexte sur un écran, par exemple sous la forme d'un menu. La commande 42 peut également gérer la navigation dans le menu affiché. La commande 42 gère également l'affichage d'une page requise sur l'interface 39.

Le récepteur de télévision ou le module de commande 38 peut comprendre une ou plusieurs mémoires 44 et 45. La commande 42 communique en lecture et/ou écriture avec les mémoires 44 et 45. La mémoire 44 est en l'occurrence une mémoire non volatile destinée à mémoriser des informations de mise en forme d'un menu ou une base de donnée contenant des identifiants de pages télétexte et/ou des pages télétexte. Les données sont ainsi mémorisées même lors de l'extinction du récepteur de télévision. La mémoire 45 est en l'occurrence une mémoire vive utilisée pour mémoriser des pages télétexte. Ces pages télétexte peuvent donc être visionnées jusqu'à l'extinction du récepteur de télévision. Chaque mémoire peut présenter une taille de 1 Mo. Le système d'exploitation de la commande 42 et du module de commande 38 peut être stocké dans la mémoire non volatile 44. Le système d'exploitation est par exemple exécuté dans la mémoire vive 45.

On va maintenant décrire plusieurs modes complémentaires possibles pour la mémorisation de pages télétexte. Selon une variante, la commande 42 commande au tuner 31 de balayer des chaînes (par exemple prédéfinies par l'utilisateur) et la mémorisation en mémoire vive 45 des pages correspondant aux identifiants affichés. La commande peut également commander la mémorisation de l'ensemble des pages des chaînes balayées dans la mémoire vive 45. Le balayage peut être commandé automatiquement à intervalles réguliers.

Selon une autre variante, le récepteur de télévision présente un mode de veille durant lequel il alimente les circuits utilisés par la commande 42. Dans ce mode de veille, la commande 42 peut commander un balayage des chaînes et la mémorisation de l'ensemble des pages balayées dans la mémoire non volatile 44. L'alimentation des circuits utilisés en mode de veille sera de préférence non permanente afin de réduire la consommation électrique. Les identifiants correspondants sont également mémorisés afin d'afficher un menu adapté aux pages mémorisées.

Selon une variante, la commande 42 mémorise avantageusement des identifiants ou des pages requises par l'utilisateur dans une mémoire non volatile. La commande 42 reçoit ainsi des requêtes de mémorisation d'identifiants ou de pages par l'intermédiaire de l'interface 39. La commande 42 pourra mémoriser et afficher ultérieurement des identifiants ou des pages préférés par l'utilisateur. Le cas échéant, la page sera automatiquement mise à jour lors d'un balayage des chaînes.

Afin d'afficher l'image fournie par une chaîne requise par l'utilisateur durant le mode télétexte, la commande 42 transmet si nécessaire une consigne de chaîne au tuner 31. La commande 42 réalise alors l'affichage de l'image requise fournie par le décodeur 37.

## Revendications

1. Procédé de gestion du mode télétexte d'un récepteur de télévision présentant un unique tuner, comprenant dans ce mode télétexte les étapes consistant à :
- afficher des identifiants (12) de pages télétexte transmises par plusieurs chaînes distinctes (11);
- recevoir une requête d'affichage d'une page télétexte dont l'identifiant est affiché;
- commander ensuite le tuner du récepteur pour récupérer la page requise ;
- afficher la page télétexte requise.

2. Procédé selon la revendication 1, dans lequel le mode télétexte présente sélectivement une étape de saisie d'un identifiant de page télétexte fourni par un utilisateur, et en ce que les identifiants de page affichés incluent l'identifiant saisi.

3. Procédé selon la revendication 1 ou 2, comprenant étapes consistant à recevoir une requête d'affichage de l'image d'une chaîne, commander le tuner pour recevoir le signal d'image de cette chaîne, puis afficher l'image correspondant au signal d'image de cette chaîne.

4. Procédé selon l'une quelconque des revendications précédentes, dans lequel on effectue, durant l'affichage de la page télétexte requise, un balayage des chaînes et la mémorisation de pages télétexte dont l'identifiant (12) est mémorisé.

5. Dispositif de gestion de fonction télétexte d'un récepteur de télévision, **caractérisé en ce qu'**il comprend :
- un module d'affichage (43) d'une image sur un écran ;
- un unique tuner ;
- un module de commande,
- présentant une interface (39) de réception d'une requête d'un utilisateur demandant l'affichage d'une page télétexte;
- présentant une interface de réception (40) d'une page télétexte destinée à être connectée à des moyens de décodage télétexte (37) ;
- présentant une commande (42) de mode télétexte :
- connectée au tuner (31) ;et
- commandant l'affichage d'identifiants de pages télétexte, l'affichage d'une page télétexte requise par un utilisateur et le changement de chaîne par le tuner en réponse à une requête d'affichage d'une page télétexte par un utilisateur, cette requête impliquant un changement de chaîne.

6. Dispositif selon la revendication 5, dans lequel le module de commande présente une interface de réception d'une requête d'un utilisateur demandant la mémorisation d'un identifiant d'une page télétexte, et en ce que la commande commande la mémorisation de l'identifiant requis et l'affichage de cet identifiant.

7. Dispositif selon la revendication 5 ou 6, dans lequel le module de commande comprend une interface de réception d'une requête d'un utilisateur demandant l'affichage d'une image d'une chaîne, le module de commande commandant le tuner pour recevoir le signal d'image de cette chaîne lors de la réception d'une requête d'affichage de l'image de cette chaîne, puis commandant l'affichage de l'image correspondante.

8. Dispositif selon l'une quelconque des revendications 5 à 7, comprenant un module de mémorisation (45) de pages télétexte et un module de mémorisation d'identifiants de pages télétexte, la commande commandant un balayage des chaînes par le tuner et la mémorisation de pages télétexte, dont l'identifiant est mémorisé, durant l'affichage d'une page télétexte requise.

9. Récepteur de télévision, **caractérisé en ce qu'**il comprend :
- un dispositif de gestion de fonction télétexte selon l'une quelconque des revendications 5 à 8 ;
- un circuit PIF (33) connecté au tuner ;
- un décodeur (37) connecté au circuit PIF, générant une page télétexte et l'appliquant sur l'interface de réception (40) de page télétexte.
